# EUROPÄISCHE PATENTSCHRIFT

(11) **EP 0 442 055 B1**
(45) Veröffentlichungstag und Bekanntmachung des Hinweises auf die Patenterteilung: **13.07.1994**
(21) Anmeldenummer: 90122700.9
(22) Anmeldetag: 28.11.1990
(51) Int. Cl.: G01D 5/26

(54) **Positionsmesseinrichtung**
Position measuring device
Dispositif de mesure de positions

(30) Priorität: 15.02.1990 DE 9001767 U
(43) Veröffentlichungstag der Anmeldung: 21.08.1991
(73) Patentinhaber: Dr. Johannes Heidenhain GmbH, D-83292 Traunreut (DE)
(72) Erfinder: Schopf, Reinhold, Dipl.-Ing., W-8223 Trostberg (DE)

(56) Entgegenhaltungen:
- EP-A- 0 256 230
- DE-U- 8 327 325
- US-A- 3 526 890

## Beschreibung

Die Erfindung betrifft eine Positionsmeßeinrichtung gemäß dem Oberbegriff des Anspruches 1.

Derartige Positionsmeßeinrichtungen werden vorwiegend bei Bearbeitungsmaschinen zur Messung der Relativlage eines Werkzeuges bezüglich eines zu bearbeitenden Werkstückes eingesetzt.

Bei einer in der Zeitschrift messen + prüfen/automatik, Juli/August 1974 auf den Seiten 435 bis 438 beschriebenen Positionsmeßeinrichtung wird eine Maßverkörperung von einer Abtasteinrichtung abgetastet, indem die Abtasteinrichtung entlang der Maßverkörperung geführt wird. Als Führungselemente werden Kugellager verwendet, die auf dem Träger der Maßverkörperung abrollen und die Abtasteinrichtung in einem festen Abstand zur Maßverkörperung halten.

Die Lauffläche der Kugellager, die bei dieser bekannten Positionsmeßeinrichtung Verwendung finden, ist so breit oder zumindest annähernd so breit wie der Bereich der Achsbohrung, bzw. der Bereich der Lagerkugeln. Dies hat den Nachteil, daß auf dem Träger der Maßverkörperung ein relativ breiter Bereich neben der Maßverkörperung als Laufbahn vorgesehen werden muß, wodurch sich die Baugröße der Positionsmeßeinrichtung erhöht.

Darüber hinaus ist allgemein die Verwendung von Rollen in Positionsmeßeinrichtungen bekannt, beispielsweise wird hier nur auf die US-A-3,526,890, EP-A-0 256 230 und die DE-U-83 27 325 verwiesen.

Aufgabe der Erfindung ist es, eine Positionsmeßeinrichtung zu schaffen, die eine kompakte Bauform aufweist.

Diese Aufgabe wird erfindungsgemäß durch die Merkmale des Anspruches 1 gelöst.

Die mit der Erfindung erzielten Vorteile bestehen insbesondere darin, daß für die Kugellager nur eine schmale Laufbahn benötigt wird, und daß die Kugellager trotzdem eine hohe Tragfähigkeit besitzen. Weiterhin ist durch die Erfindung eine kleine Bauform der Positionsmeßeinrichtung möglich.

Vorteilhafte Ausbildungen der Erfindung entnimmt man den abhängigen Ansprüchen.

In der Zeichnung ist ein Ausführungsbeispiel der Positionsmeßeinrichtung nach der Erfindung dargestellt.

Es zeigt
- Figur 1: einen Querschnitt einer Positionsmeßeinrichtung;
- Figur 2: einen Schnitt nach der Linie II-II der Figur 1;
- Figur 3: eine Draufsicht auf die Maßverkörperung;
- Figur 4: eine stark vergrößerte Darstellung eines Kugellagers.

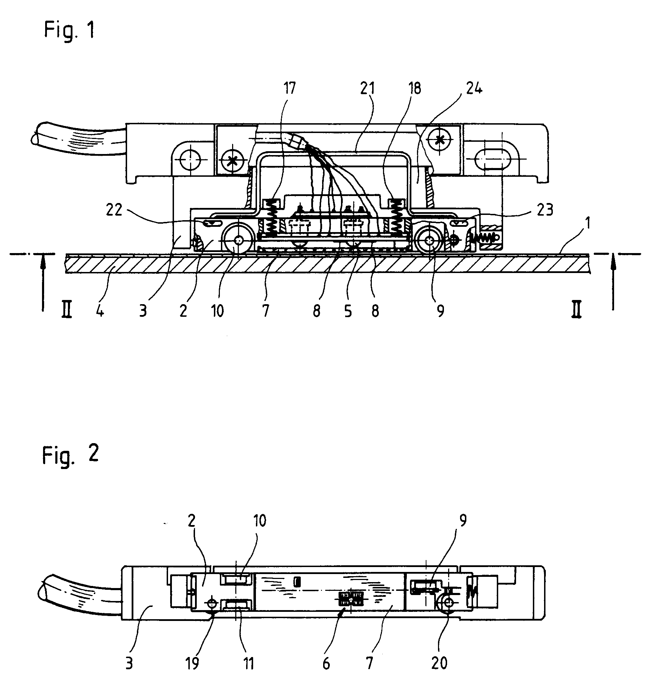

Die in den Figuren 1 bis 3 gezeigte Positionsmeßeinrichtung ist eine lichtelektrische inkrementale Längenmeßeinrichtung, bei der als Maßverkörperung eine Teilung 1 von einer Abtasteinrichtung 2 berührungsfrei abgetastet wird. Die Abtasteinrichtung 2 ist gelenkig am Mitnehmer 3 angekoppelt und in einem vorgegebenen konstanten Abstand entlang der Teilung 1 geführt. Die Teilung 1 besteht aus reflektierenden Strichen und lichtabsorbierenden Lücken auf einem Stahlband 4 als Träger.

Die lichtelektrische Abtastung der Teilung 1 ist hinreichend bekannt und wird daher nur kurz erläutert. Das Licht einer Lichtquelle 5 fällt durch die Abtastfelder 6 einer Abtastplatte 7 auf die Teilung 1, wird dort von den reflektierenden Teilstrichen umgelenkt und gelangt zu den Photoelementen 8 der Abtasteinrichtung 2. Die Photoelemente 8 liefern periodische Abtastsignale, die einer Auswerteeinheit zur Bildung der Meßwerte für die gegenseitige Relativlage zwischen der Abtasteinrichtung 2 und dem Stahlband 4 zugeführt werden.

Zur Führung der Abtasteinrichtung 2 entlang der Teilung 1 sind drei Kugellager 9, 10, 11 in der Abtasteinrichtung 2 vorgesehen. Alle Kugellager 9, 10, 11 rollen auf dem Stahlband 4 ab. Auf dem Stahlband 4 ist die Teilung 1 sowie daneben eine Referenzmarkenspur 12 aufgebracht. Ein Kugellager 9 rollt zwischen der Teilung 1 und der Referenzmarkenspur 12 ab. Die Laufbahnen der anderen Kugellager 10 und 11 befinden sich an den äußeren Randbereichen des Stahlbandes 4, also eine Laufbahn seitlich der Teilung 1 und eine Laufbahn gegenüberliegend seitlich der Referenzmarkenspur 12.

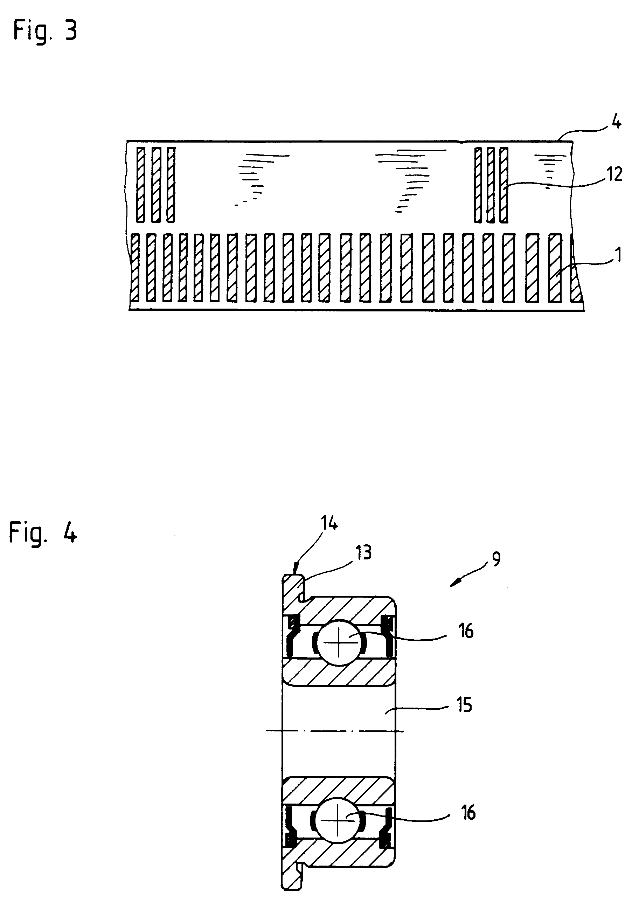

Die Kugellager 9, 10, 11 sind an sich bekannte Radial-Rillenkugellager mit einem Flansch 13. Diese Kugellager sind in einem Prospekt "Miniatur-Kugellager" der Firma Gebr. Reinfurt GmbH & Co. KG; D-8700 Würzburg; 1990 beschrieben. Ein derartiges Kugellager 9 ist in der Figur 4 stark vergrößert im Schnitt gezeigt. Der Flansch 13 bildet eine schmale Lauffläche 14, mit der sich das Kugellager 9 auf dem Stahlband 4 abstützt und abrollt. Die Achsbohrung 15 und der Bereich der Lagerkugeln 16 ist um ein Vielfaches breiter als der Flansch 13, wodurch eine hohe Tragfähigkeit sowie Laufruhe und eine hohe Lebensdauer des Kugellagers 9 gewährleistet ist. Besonders vorteilhaft ist es, wenn alle Kugellager 9, 10, 11 mit einem Flansch 13 versehen sind, es liegt aber auch im Rahmen der Erfindung, beispielsweise nur ein Kugellager 9 mit einem Flansch 13 zu verwenden, wobei dieses Kugellager 9 auch zwischen mehreren Teilungsspuren abrollen kann.

Die erfindungsgemäße Verwendung von Kugellagern 9, 10, 11 mit Flansch 13 ist nicht auf die gezeigte Längenmeßeinrichtung beschränkt. Derartige Kugellager 9, 10, 11 können auch bei inkrementalen Winkelmeßeinrichtungen zur Führung der Abtasteinrichtung Anwendung finden. Weitere Einsatzgebiete sind absolute lichtelektrische Längen- und Winkelmeßeinrichtungen, aber auch Längen- und Winkelmeßeinrichtungen, bei denen ein anderes physikalisches Meßprinzip Anwendung findet, dabei kann die Abtasteinrichtung nur aus einer Abtastplatte bestehen, die die Abtastelemente trägt.

In der Figur 1 ist die gelenkige Ankopplung der Abtasteinrichtung 2 an den Mitnehmer 3 gezeigt. Die Abtasteinrichtung 2 wird durch die Druckfedern 17 und 18 in Richtung des Stahlbandes 4 gedrückt. Das Stahlband 4 ist in einem nicht gezeigten Aluminium- oder Stahlprofil befestigt und wie bereits erläutert wurde, wird die Abtasteinrichtung 2 entlang des Stahlbandes 4 geführt. Hierzu dienen die Kugellager 9, 10, 11 sowie weitere Kugellager 19, 20, die an einer senkrecht zum Stahlband 4 verlaufenden Fläche des Profils abrollen. Die Abtasteinrichtung 2 wird durch eine Bügelfeder 21 an diese Fläche gedrückt. Die Enden der Bügelfeder 21 sind in der Abtasteinrichtung 2 durch Einhängen in Schlitze 22, 23 befestigt. Den seitlichen Druck übt die Bügelfeder 21 aus, indem sie durch eine schmale Öffnung 24 in den Mitnehmer 3 hineinragt, wobei diese schmale Öffnung 24 die Bügelfeder 21 seitlich fixiert. Ändert sich während der Abtastung des Stahlbandes 4 der Abstand zwischen der Abtasteinrichtung 2 und den Mitnehmer 3, so bewegt sich die Bügelfeder 21 mit der Abtasteinrichtung 2, indem sie in der schmalen Öffnung 24 des Mitnehmers 3 gleitet. Die Andruckkraft sowie die Kraftangriffspunkte der Bügelfeder 21 bleiben dabei erhalten.

Anstelle des Stahlbandes 4 kann auch ein Glasmaßstab als Träger der Teilung 1 dienen, dabei kann der Glasmaßstab im Auflicht- oder Durchlichtverfahren abgetastet werden. Im gezeigten Ausführungsbeispiel rollen die Kugellager 19 und 20 an einer Fläche des Profils ab, als Führungsfläche kann aber auch eine Kante des Glasmaßstabes Verwendung finden. Weiterhin muß nicht die gesamte Abtasteinrichtung 2 mit der Lichtquelle 5, den Photoelementen 8 und der Abtastplatte 7 gelenkig am Mitnehmer 3 befestigt und mittels der Kugellager 9, 10, 11, 19, 20 entlang der Teilung 1 in einem konstanten Abstand geführt sein. Es liegt auch im Rahmen der Erfindung, daß nur die Abtastplatte 7 am Mitnehmer 3 gelenkig befestigt ist und mittels mehrerer erfindungsgemäß ausgestalteter Kugellager geführt ist.

## Patentansprüche

1. Positionsmeßeinrichtung mit mehreren Teilungsspuren (1, 12) auf einem Träger (4) und einer Abtasteinrichtung (2) zur Abtastung der Teilungsspuren (1, 12), wobei die Abtasteinrichtung (2) relativ zum Träger (4) der Teilungsspuren (1, 12) in Meßrichtung verstellbar ist und zumindest die Abtastplatte (7) der Abtasteinrichtung (2) über zumindest ein Kugellager (9) auf dem Träger (4) geführt wird, dadurch gekennzeichnet, daß das zumindest eine Kugellager (9) einen Flansch (13) aufweist und die Breite des Kugellagers (9) im Bereich der Achsbohrung (15) und/oder im Bereich der Lagerkugeln (16) um ein Vielfaches größer ist als die Breite der Lauffläche (14) des Flansches (13), und daß sich das Kugellager (9) mit seiner schmalen Flanschoberfläche (14) zwischen Teilungsspuren (1, 12) des Trägers (4) abstützt und dort abrollt.

2. Positionsmeßeinrichtung nach Anspruch 1, dadurch gekennzeichnet, daß die Abtasteinrichtung (2) mit einem Mitnehmer (3) quer zur Meßrichtung nachgiebig verbunden ist und in der Abtasteinrichtung (2) drei Kugellager (9, 13, 11) gelagert sind, dessen Laufflächen (14) auf einer Oberfläche des Trägers (4) abrollen.

3. Positionsmeßeinrichtung nach Anspruch 2, dadurch gekennzeichnet, daß auf dem Träger (4) zwei parallel nebeneinanderliegende Teilungsspuren (1, 12) vorgesehen sind, wobei eine der Teilungsspuren eine Referenzmarkenspur (12) ist und sich ein Kugellager (9) mit seiner Lauffläche (14) zwischen den beiden Teilungsspuren (1, 12) abstützt.

4. Positionsmeßeinrichtung nach Anspruch 3, dadurch gekennzeichnet, daß sich die zwei übrigen Kugellager (10, 11) diametral gegenüberliegend neben den beiden Teilungsspuren (1, 12) abstützen.

5. Positionsmeßeinrichtung nach einem der vorhergehenden Ansprüche, dadurch gekennzeichnet, daß der Träger ein Stahlband (4) ist, das in einem Profil befestigt ist und die Maßverkörperung als reflektierende Teilung (1) ausgebildet ist.

6. Positionsmeßeinrichtung nach Anspruch 1, dadurch gekennzeichnet, daß die Abtasteinrichtung (2) mit einem Mitnehmer (3) quer zur Meßrichtung nachgiebig verbunden ist und in der Abtasteinrichtung (2) Kugellager (9, 10, 11, 19, 20) gelagert sind, von denen sich mehrere auf einer Oberfläche des Trägers (4) und mehrere auf einer dazu senkrechten Fläche eines Profils abstützen.

7. Positionsmeßeinrichtung nach Anspruch 6, dadurch gekennzeichnet, daß zwischen der Mitnehmer (3) und der Abtasteinrichtung (2) Druckfedern (17, 18) angeordnet sind, die die Abtasteinrichtung (2) in Richtung des Trägers (4) drücken und daß eine Bügelfeder (21) in der Abtasteinrichtung (2) befestigt ist, die die Abtasteinrichtung (2) an eine Fläche des Profils drückt.

8. Positionsmeßeinrichtung nach Anspruch 7, dadurch gekennzeichnet, daß die Bügelfeder (21) mit ihren beiden Enden in Meßrichtung beabstandet in der Abtasteinrichtung (2) befestigt ist, und daß die Bügelfeder (21) in den Mitnehmer (3) hineinragt, wobei der Mitnehmer (3) eine in Meßrichtung verlaufende schlitzförmige Öffnung (24) zur Aufnahme und seitlichen Fixierung der Bügelfeder (21) aufweist.

9. Positionsmeßeinrichtung nach Anspruch 8, dadurch gekennzeichnet, daß die Bügelfeder (21) mit ihren beiden Enden jeweils in einen Schlitz (22, 23) der Abtasteinrichtung (2) eingehängt ist.

## Claims

1. Position measuring device with a plurality of graduated tracks (1, 12) on a carrier (4) and a scanning device (2) for scanning the graduated tracks (1, 12), wherein the scanning device (2) is adjustable relative to the carrier (4) of the graduated tracks in the measuring direction and at least the scanning plate (7) of the scanning device (2) is guided on the carrier (4) by at least one ball bearing (9), **characterised** in that at least the one ball bearing (9) has a flange (13) and the width of the ball bearing (9) in the region of the axial bore (15) and/or in the region of the ball bearings (16) is many times larger than the width of the running surface (14) of the flange (13), and that the narrow flange surface (14) of the ball bearing (9) is supported between the graduated tracks (1, 12) of the carrier (4) and rides on the same.

2. Position measuring device according to claim 1, **characterised** in that transverse to the measuring direction the scanning device (2) is resiliently connected with a follower (3) and in the scanning device (2) are mounted three ball bearings (9, 10, 11) whose running surfaces (14) ride on a surface of the carrier (4).

3. Position measuring device according to claim 2, **characterised** in that on the carrier (4) there are provided two graduated tracks (1, 12) arranged parallel next to each other, wherein one of the graduated tracks is a reference mark track (12) and a ball bearing (9) with its running surface (14) is supported between the two graduated tracks (1, 12).

4. Position measuring device according to claim 3, **characterised** in that the two remaining ball bearings (10, 11) diametrically arranged opposite each other are supported adjacent to the two graduated tracks (1, 12).

5. Position measuring device according to one of the aforementioned claims, **characterised** in that the carrier is a steel band (4) which is fixed in a profile and the scale embodiment is designed as a reflecting graduation (1).

6. Position measuring device according to claim 1, **characterised** in that the scanning device (2) is resiliently connected to a follower (3) transverse to the measuring direction and in the scanning device (2) are mounted ball bearings (9, 10, 11, 19, 20) of which a number are supported on a surface of the carrier (4) and a plurality are supported on a surface of a profile arranged perpendicularly to the surface of the carrier (4).

7. Position measuring device according to claim 6, **characterised** in that between the follower (3) and the scanning device (2) there are arranged pressure springs (17, 18) which press the scanning device (2) in the direction of the carrier (4) and that a U spring clip (21), fixed to the scanning device (2), presses the scanning device (2) against a surface of the profile.

8. Position measuring device according to claim 7, **characterised** in that the U spring clip (21), with its two ends spaced apart in the measuring direction, is fixed to the scanning device (2), and that the U spring clip (21) extends into the follower (3), in which the follower (3) has a slot-like opening (24), running in the measuring direction, for receiving and lateral fixing of the U spring clip (21).

9. Position measuring device according to claim 8, **characterised** in that each of the two ends of the U spring clip (21) is secured in a slot (22, 23) of the scanning device (2).

## Revendications

1. Dispositif de mesure de position comportant plusieurs piste graduées (1, 12) disposées sur un support (4) ainsi qu'un dispositif de lecture (2) pour la lecture des pistes graduées (1, 12), le dispositif de lecture (2) pouvant être réglé dans la direction de mesure par rapport au support (4) des pistes graduées (1, 12) et au moins la plaque de lecture (7) du dispositif de lecture (2) étant guidée sur le support (4) par l'intermédiaire d'au moins un roulement à billes (9), caractérisé par le fait que le roulement à billes (9) au nombre d'au moins un comporte une collerette (13) et que la largeur du roulement à billes (9) dans la région de l'alésage (15) recevant l'axe et/ou dans la région des billes (16) est supérieure à la largeur de la surface de roulement (14) de la collerette (13) et représente un multiple de celle-ci et par le fait que le roulement à billes (9) prend appui par sa surface étroite (14) entre les pistes de graduations (1, 12) du support (4) et y roule.

2. Dispositif de mesure de position selon la revendication 1, caractérisé par le fait que le dispositif de lecture (2) est lié par une liaison souple transversalement à la direction de mesure à un moyen d'entraînement (3) et que trois roulements à bille (9, 10, 11) dont les surfaces de roulement (14) roulent sur une surface du support (4) sont montés dans le dispositif de lecture (2).

3. Dispositif de mesure de position selon la revendication 2, caractérisé par le fait qu'il est prévu sur le support (4) deux pistes de graduation (1, 12) parallèles disposées côte à côte, l'une des pistes de graduation étant une piste de repères de référence (12) et un roulement à billes (9) prenant appui par sa surface de roulement (14) entre les deux pistes de graduations (1, 12).

4. Dispositif de mesure de position selon la revendication 3, caractérisé par le fait que les deux autres roulements à billes (10, 11) prennent appui en des points diamétralement opposés à côté des deux pistes de graduation (1, 12).

5. Dispositif de mesure de position selon l'une des revendications précédentes, caractérisé par le fait que le support est une bande de métal (4) qui est fixée dans un profilé et que la mesure matérialisée est agencée sous forme de graduation réfléchissante (1).

6. Dispositif de mesure de position selon la revendication 1, caractérisé par le fait que le dispositif de lecture (2) est lié par une liaison souple transversalement à la direction de mesure à un moyen d'entraînement (3) et que des roulements à bille (9, 10, 11, 19 20) sont montés dans le dispositif de lecture (2), roulements parmi lesquels plusieurs prennent appui sur une surface du support (4) et plusieurs prennent appui sur une surface d'un profilé qui est perpendiculaire à ladite surface du support.

7. Dispositif de mesure de position selon la revendication 6, caractérisé par le fait que des ressorts de compression (17, 18) qui repoussent le dispositif de lecture (2) en direction du support (4) sont disposés entre le moyen d'entraînement (3) et le dispositif de lecture (2) et par le fait qu'un ressort en forme d'étrier (21) est fixé dans le dispositif de lecture (2) et presse le dispositif de lecture (2) contre une surface du profilé.

8. Dispositif de mesure de position selon la revendication 7, caractérisé par le fait que le ressort en forme d'étrier (21) est fixé dans le dispositif de lecture (2) par ses deux extrémités espacées dans la direction de mesure et par le fait que le ressort en forme d'étrier (21) pénètre dans le moyen d'entraînement (3), le moyen d'entraînement (3) présentant une ouverture (24) en forme de fente qui s'étend dans la direction de mesure et est destinée à recevoir et à immobiliser latéralement le ressort en forme d'étrier (21).

9. Dispositif de mesure de position selon la revendication 8, caractérisé par le fait que le ressort en forme d'étrier (21) est accroché par ses deux extrémités respectivement dans une fente (22, 23) du dispositif de lecture (2).
